# EUROPEAN PATENT APPLICATION

(11) **EP 4 496 023 A1**
(43) Date of publication of application: **22.01.2025**
(21) Application number: 23770504.1
(22) Date of filing: 06.03.2023
(51) Int. Cl.: H01M 4/13, H01M 10/0587

(54) **NON-AQUEOUS ELECTROLYTE SECONDARY BATTERY**

(30) Priority: 18.03.2022 JP 2022044490
(71) Applicant: Panasonic Energy Co., Ltd., Osaka 570-8511 (JP)
(72) Inventor: INOMATA, Shiori, Kadoma-shi, Osaka 571-0057 (JP); SHIBUTANI, Yoshihiro, Kadoma-shi, Osaka 571-0057 (JP)
(74) Representative: Eisenführ Speiser
(86) International application number: PCT/JP2023/008318
(87) International publication number: WO 2023/176548

(57) **Abstract**

A positive electrode (11) of this non-aqueous electrolyte secondary battery (10) comprises a positive electrode current collector, and a positive electrode mixture layer that is formed on the positive electrode current collector and contains a positive electrode active material and a binding material, the non-aqueous electrolyte secondary battery being characterized in that, when the positive electrode (11) is divided into a first end region (11a) having a width that is 1/3 of the total width (W) of the positive electrode (11) on the center side from one end in the width direction of the positive electrode (11), a second end region (11b) having a width that is 1/3 of the total width (W) of the positive electrode (11) on the center side from the other end in the width direction of the positive electrode (11), and a center region (11c) interposed between the first end region (11a) and the second end region (11b), the stiffness values of the first end region (11a) and the second end region (11b) are lower than the stiffness value of the center region (11c), and the stiffness value of the positive electrode as a whole is in a range of 0.018 N/mm to 0.040 N/mm.

## Description

### TECHNICAL FIELD

The present disclosure relates to a non-aqueous electrolyte secondary battery.

### BACKGROUND

In recent years, non-aqueous electrolyte secondary batteries such as lithium ion secondary batteries have been used in a wide range of applications such as notebook PCs, electric tools, power-assisted bicycles, and electric vehicles due to their high energy density. Among them, development of a non-aqueous electrolyte secondary battery having a higher capacity and excellent life performance is desired. In order to cope with the increase in capacity, a method for increasing density of a positive electrode of a non-aqueous electrolyte secondary battery is known, but when the density of the positive electrode is increased, flexibility of the positive electrode is reduced, and there is a problem that foil breakage of the positive electrode occurs when the positive electrode is wound.

Therefore, in order to improve the flexibility of the positive electrode, for example, Patent Literatures 1 and 2 propose heat treatment of the positive electrode.

However, although the flexibility of the positive electrode is improved by heat-treating the positive electrode, there is a problem that the binding material contained in the positive electrode becomes a film and becomes a resistance component in the positive electrode, and charge-discharge cycle characteristics of the battery are deteriorated.

### CITATION LIST

### PATENT LITERATURES

PATENT LITERATURE 1: JP 2010-165564
PATENT LITERATURE 2: WO 2010/029675 A

### SUMMARY

Therefore, an object of the present disclosure is to provide a non-aqueous electrolyte secondary battery capable of suppressing foil breakage and deterioration of charge-discharge cycle characteristics when a positive electrode is wound.

According to one aspect of the present disclosure, there is provided a non-aqueous electrolyte secondary battery including: a wound electrode assembly in which a positive electrode and a negative electrode are wound with a separator interposed therebetween; and a non-aqueous electrolyte, in which the positive electrode includes a positive electrode current collector and a positive electrode mixture layer formed on the positive electrode current collector and containing a positive electrode active material and a binding material, when the positive electrode is divided into a first end region having a width of 1/3 with respect to an overall width of the positive electrode from one end in a width direction of the positive electrode to a center side, a second end region having a width of 1/3 with respect to the overall width of the positive electrode from the other end in the width direction of the positive electrode to the center side, and a central region sandwiched between the first end region and the second end region, a stiffness value of each of the first end region and the second end region is lower than a stiffness value of the central region, and a stiffness value of the entire positive electrode is in a range greater than or equal to 0.018 N/mm and less than or equal to 0.040 N/mm.

According to one aspect of the present disclosure, it is possible to provide a non-aqueous electrolyte secondary battery capable of suppressing foil breakage and deterioration of charge-discharge cycle characteristics when a positive electrode is wound.

### BRIEF DESCRIPTION OF DRAWINGS

FIG. 1 is a cross-sectional view of a non-aqueous electrolyte secondary battery as an example of an embodiment.
FIG. 2 is a schematic plan view of a positive electrode in a state before being wound.
FIG. 3 is a diagram for explaining a method of measuring a stiffness value by a loop stiffness method.

### DESCRIPTION OF EMBODIMENTS

An example of an embodiment will be described with reference to the drawings. The non-aqueous electrolyte secondary battery of the present disclosure is not limited to the embodiment described below. The drawings referred to in the description of the embodiment are schematically illustrated.

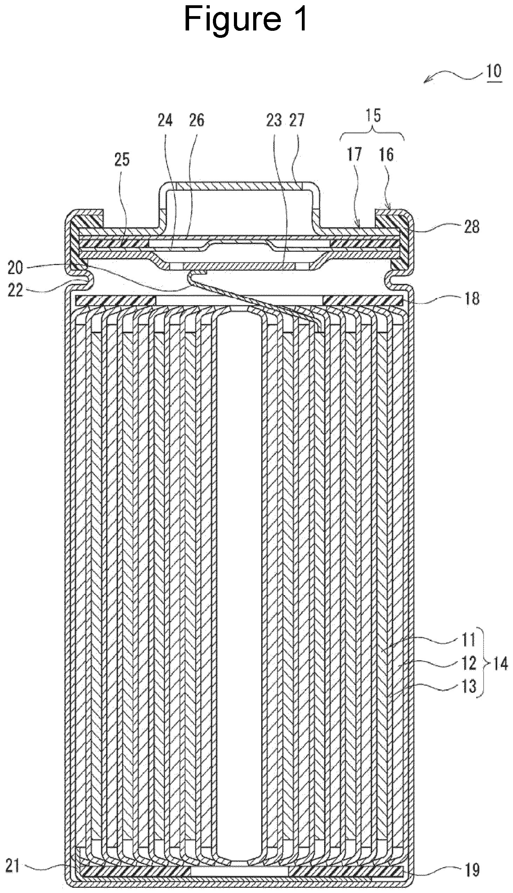

FIG. 1 is a cross-sectional view of a non-aqueous electrolyte secondary battery as an example of an embodiment. A non-aqueous electrolyte secondary battery 10 illustrated in FIG. 1 includes a wound electrode assembly 14 formed by winding a positive electrode 11 and a negative electrode 12 with a separator 13 interposed therebetween, a non-aqueous electrolyte, insulating plates 18 and 19 respectively disposed above and below the electrode assembly 14, and a battery case 15 accommodating the above-mentioned members. The battery case 15 includes an exterior can 16 and a sealing assembly 17 that closes an opening of the exterior can 16.

The exterior can 16 is, for example, a bottomed cylindrical metal case. A gasket 28 is provided between the exterior can 16 and the sealing assembly 17 to ensure sealability of the inside of the battery. The exterior can 16 has a projecting portion 22 which supports the sealing assembly 17 and in which a part of a side surface projects inward, for example. The projecting portion 22 is preferably formed in an annular shape along a circumferential direction of the exterior can 16, and supports the sealing assembly 17 on the upper surface thereof.

The sealing assembly 17 has a structure in which a filter 23, a lower vent member 24, an insulating member 25, an upper vent member 26, and a cap 27 are sequentially stacked from the electrode assembly 14 side. Each member included in the sealing assembly 17 has, for example, a disk shape or a ring shape, and the members excluding the insulating member 25 are electrically connected to each other. The lower vent member 24 and the upper vent member 26 are connected to each other at the respective central portions, and the insulating member 25 is interposed between the respective peripheral portions. When the internal pressure of the non-aqueous electrolyte secondary battery 10 increases due to heat generation due to an internal short circuit or the like, for example, the lower vent member 24 is deformed to push up the upper vent member 26 toward the cap 27 side and breaks, and a current path between the lower vent member 24 and the upper vent member 26 is cut off. When the internal pressure further increases, the upper vent member 26 breaks, and the gas is discharged from the opening of the cap 27.

In the non-aqueous electrolyte secondary battery 10 illustrated in FIG. 1, a positive electrode lead 20 attached to the positive electrode 11 extends to the sealing assembly 17 side through a through hole of the insulating plate 18, and a negative electrode lead 21 attached to the negative electrode 12 extends to the bottom side of the exterior can 16 through the outside of the insulating plate 19. The positive electrode lead 20 is connected to a lower surface of the filter 23 which is a bottom plate of the sealing assembly 17 by welding or the like, and the cap 27 which is a top plate of the sealing assembly 17 electrically connected to the filter 23 serves as a positive electrode terminal. The negative electrode lead 21 is connected to an inner surface of the bottom of the exterior can 16 by welding or the like, and the exterior can 16 serves as a negative electrode terminal.

Hereinafter, each component of the non-aqueous electrolyte secondary battery 10 will be described in detail.

### [Positive Electrode]

The positive electrode 11 includes a positive electrode current collector and a positive electrode mixture layer provided on the positive electrode current collector. As the positive electrode current collector, a foil of a metal such as aluminum which is stable in a potential range of the positive electrode 11, a film in which the metal is disposed on a surface layer, or the like can be used. The positive electrode mixture layer contains a positive electrode active material and a binding material, and optionally contains an additive such as a conductive agent.

The positive electrode 11 of the present embodiment is produced, for example, as follows. First, a positive electrode mixture slurry containing a positive electrode active material, a conductive agent, a binding material, and the like is applied onto the positive electrode current collector, and a coating film is dried and then compressed to obtain a positive electrode in which a positive electrode mixture layer is formed on the positive electrode current collector. The positive electrode 11 of the present embodiment can be produced by applying heat treatment to the positive electrode by bringing an end region of the positive electrode into contact with a heated roller as described later. The thickness of the positive electrode current collector is, for example, greater than or equal to 10 µm. The thickness of the positive electrode mixture layer is, for example, greater than or equal to 20 µm. The density of the positive electrode mixture layer is, for example, greater than or equal to 1.60 g/cm³.

Examples of the positive electrode active material include lithium-metal composite oxides containing transition metal elements such as Co, Mn, and Ni. Examples of the lithium-metal composite oxide include LiₓCoO₂, LiₓNiO₂, LiₓMnO₂, LiₓCo_{y}Ni_{1-y}O₂, LiₓCo_{y}M_{1-y}O_{z}, LiₓNi_{1-y}M_{y}O_{z}, LiₓMn₂O₄, LiₓMn_{2-y}M_{y}O₄, LiMPO₄, Li₂MPO₄F (M; at least one of Na, Mg, Sc, Y, Mn, Fe, Co, Ni, Cu, Zn, Al, Cr, Pb, Sb, and B, 0<x ≤ 1.2, 0<y ≤ 0.9, and 2.0 ≤ z ≤ 2.3). These may be used singly or in combination of two or more kinds thereof. The positive electrode active material preferably contains a lithium nickel composite oxide such as LiₓNiO₂, LiₓCo_{y}Ni_{1-y}O₂, and LiₓNi_{1-y}M_{y}O_{z} (M; at least one of Na, Mg, Sc, Y, Mn, Fe, Co, Ni, Cu, Zn, Al, Cr, Pb, Sb, and B, 0<x ≤ 1.2, 0<y ≤ 0.9, 2.0 ≤ z ≤ 2.3) from the viewpoint of being able to increase the capacity of the non-aqueous electrolyte secondary battery.

As the binding material, for example, fluorine-based resins such as polytetrafluoroethylene (PTFE) and polyvinylidene fluoride (PVDF), polyacrylonitrile (PAN), polyimide (PI), acrylic resins, polyolefin-based resins, styrene butadiene rubber (SBR), nitrile rubber (NBR), carboxymethyl cellulose (CMC) or a salt thereof, polyacrylic acid (PAA) or a salt thereof, polyvinyl alcohol (PVA), and the like can be used. These may be used singly or in combination of two or more kinds thereof. The content of the binding material in the positive electrode mixture layer is, for example, preferably greater than or equal to 0.5 mass% and less than or equal to 10 mass%, and more preferably greater than or equal to 1 mass% and less than or equal to 5 mass%.

Examples of the conductive agent include carbon particles such as carbon black (CB), acetylene black (AB), Ketjenblack, carbon nanotube (CNT), and graphite. These may be used singly or in combination of two or more kinds thereof.

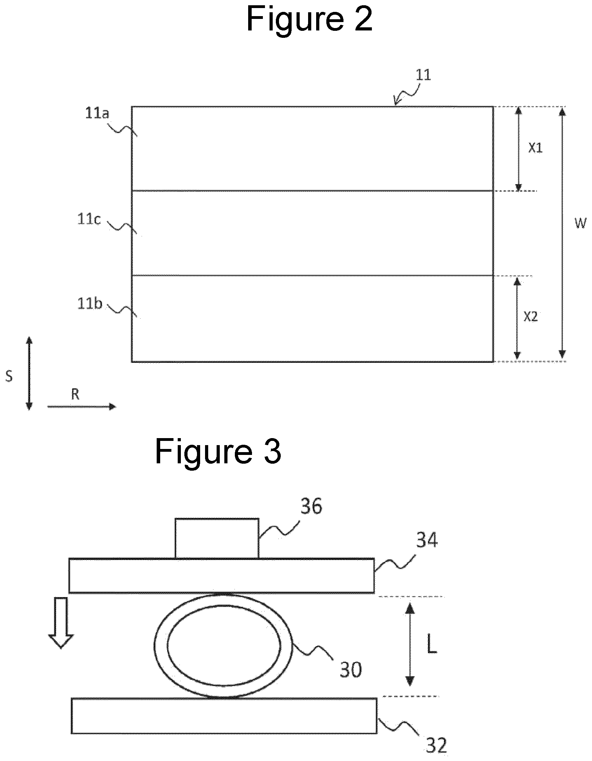

FIG. 2 is a schematic plan view of the positive electrode in a state before being wound. An arrow S illustrated in the drawing indicates a winding axis direction of the electrode assembly 14, and an arrow R orthogonal to the arrow S indicates a winding direction of the positive electrode 11 when the electrode assembly 14 is produced.

As illustrated in FIG. 2, the positive electrode 11 is divided into a first end region 11a having a width (X1) of 1/3 with respect to an overall width (W) of the positive electrode 11 from one end in a width direction of the positive electrode 11 along the winding axis direction of the electrode assembly 14 to a center side, a second end region 11b having a width (X2) of 1/3 with respect to the overall width (W) of the positive electrode 11 from the other end in the width direction of the positive electrode 11 along the winding axis direction of the electrode assembly 14 to the center side, and a central region 11c sandwiched between the first end region 11a and the second end region 11b. When the positive electrode 11 is divided into three as described above, a stiffness value of each of the first end region 11a and the second end region 11b is lower than a stiffness value of the central region 11c, and a stiffness value of the entire positive electrode 11 is in the range greater than or equal to 0.018 N/mm and less than or equal to 0.040 N/mm. The stiffness value is an index of flexibility, and a lower stiffness value indicates more flexibility. The stiffness value is measured by a loop stiffness method described later.

As in the positive electrode 11, by setting the stiffness value of the first end region 11a and the second end region 11b to be lower than the stiffness value of the central region 11c to enhance the flexibility of the end region, even when the electrode assembly 14 is produced by winding the positive electrode 11, foil breakage of the positive electrode 11 is suppressed. Here, the stiffness value can be controlled by heating the positive electrode 11. Specifically, by subjecting a part or the whole of the first end region 11a and the second end region 11b to heat treatment, the positive electrode current collector and the like in the end region are softened, and the stiffness value can be lowered. The heat treatment is performed, for example, by bringing a part or the whole of the first end region 11a and the second end region 11b of the positive electrode 11 into contact with a heated roller.

However, it is necessary to heat a part or the whole of the first end region 11a and the second end region 11b so that the stiffness value of the entire positive electrode 11 falls within a range greater than or equal to 0.018 N/mm and less than or equal to 0.040 N/mm. For example, when the heat treatment temperature of the end region is low, the stiffness value of the entire positive electrode 11 may exceed 0.040 N/mm. In this case, even when the stiffness values of the first end region 11a and the second end region 11b are lower than the stiffness value of the central region 11c, foil breakage of the positive electrode 11 may occur. The heat treatment temperature of the end region depends on the thickness of the positive electrode 11 and the like, but is preferably, for example, in the range greater than or equal to 180°C and less than or equal to 200°C.

In the present embodiment, the heat treatment to the central region 11c is not limited, but it is preferable not to perform the heat treatment to the central region 11c in that the stiffness value of the entire positive electrode 11 can be easily controlled in the range greater than or equal to 0.018 N/mm and less than or equal to 0.040 N/mm. However, when the heat treatment is performed by bringing a part or the whole of the central region 11c into contact with the heated roller, the heating temperature of the roller is desirably lower than the heat treatment temperature performed in the first end region 11a or the second end region 11b. When a part or the whole of the central region 11c is heat-treated under the same conditions as the heat treatment of the end region, the stiffness value of the entire positive electrode 11 may be lower than 0.018 N/mm. In such a case, it is assumed that the binding material coated by the heat treatment is present in the entire positive electrode 11, and the charge-discharge cycle characteristics of the battery are greatly deteriorated.

In any case, the stiffness value of each of the first end region 11a and the second end region 11b of the positive electrode 11 is lower than the stiffness value of the central region 11c of the positive electrode 11, and the stiffness value of the entire positive electrode 11 is in the range greater than or equal to 0.018 N/mm and less than or equal to 0.040 N/mm (preferably in the range greater than or equal to 0.020 N/mm and less than or equal to 0.030 N/mm), whereby foil breakage and deterioration of charge-discharge cycle characteristics when the positive electrode 11 is wound can be suppressed.

The stiffness value of each of the first end region 11a and the second end region 11b of the positive electrode 11 is preferably in a range less than or equal to 0.025 N/mm, for example, in terms of suppressing foil breakage when the positive electrode 11 is wound. In addition, the stiffness value of the central region 11c of the positive electrode 11 is preferably, for example, in a range greater than or equal to 0.020 N/mm from the viewpoint of suppressing a decrease in charge-discharge cycle characteristics of the battery, for example.

FIG. 3 is a diagram for describing a method of measuring a stiffness value by a loop stiffness method. As illustrated in FIG. 3, the loop stiffness method is a method for evaluating flexibility of a test piece by measuring stress when the test piece rounded in an annular shape is pressed at a predetermined speed. Specifically, first, each region (first end region 11a, second end region 11b, central region 11c) of the positive electrode 11 is cut into a size of width × length 80 mm of each region, and both ends thereof are matched and rounded into an annular shape to prepare a test piece 30 having an outer periphery of 80 mm. Next, an abutting portion of the test piece 30 is fixed on a lower flat plate 32 and sandwiched between an upper flat plate 34 and the lower flat plate 32. Next, the upper flat plate 34 is moved downward at a speed of 1.6 mm/sec to press the outer periphery of the test piece 30, and a repulsive force of the test piece 30 when a gap L of the test piece 30 becomes 11 mm is measured by the load cell 36. In this way, the repulsive force of at least three test pieces 30 is measured, each obtained repulsive force is converted per width of the test piece, and an average value thereof is taken as the stiffness value of each region. In addition, when the stiffness value of the entire positive electrode 11 is measured, the positive electrode 11 is cut into width (W) × length 80 mm, both ends thereof are brought into contact with each other and rounded in an annular shape to prepare the test piece 30 having an outer periphery of 80 mm, the repulsive force of at least three test pieces 30 is measured in the same manner as described above, each obtained repulsive force is converted per width of the test piece, and an average value thereof is taken as the stiffness value of the entire positive electrode 11.

### [Negative Electrode]

The negative electrode 12 includes a negative electrode current collector and a negative electrode mixture layer provided on the negative electrode current collector. As the negative electrode current collector, for example, a foil of a metal such as copper which is stable in a potential range of the negative electrode, a film in which the metal is disposed on a surface layer, or the like is used. The negative electrode mixture layer includes, for example, a negative electrode active material and a binding material. The negative electrode 12 can be produced, for example, by applying a negative electrode mixture slurry containing a negative electrode active material, a binder, and the like onto a negative electrode current collector, drying a coating film, and then performing compression to form a negative electrode mixture layer on the negative electrode current collector.

The negative electrode active material can reversibly store and release lithium ions, and examples thereof include carbon materials such as natural graphite and artificial graphite, metals alloyed with lithium such as silicon (Si) and tin (Sn), alloys and composite oxides containing the metal elements, and the like.

Examples of the binding material include those similar to the positive electrode 11. The content of the binding material in the negative electrode mixture layer is, for example, preferably greater than or equal to 0.5 mass% and less than or equal to 10 mass%, and more preferably greater than or equal to 1 mass% and less than or equal to 5 mass%.

### [Separator]

As the separator 13, for example, a porous sheet having ion permeability and insulating property is used. Specific examples of the porous sheet include fine porous thin films, woven fabrics, and nonwoven fabrics. As a material of the separator, olefin-based resins such as polyethylene and polypropylene, cellulose, and the like are suitable. The separator 13 may be a stacked body having a cellulose fiber layer and a thermoplastic resin fiber layer such as an olefin-based resin. Further, a multilayer separator including a polyethylene layer and a polypropylene layer may be used, and a separator having a surface coated with a material such as an aramid-based resin or a ceramic may be used.

### [Non-Aqueous Electrolyte]

The non-aqueous electrolyte includes a non-aqueous solvent and an electrolyte salt dissolved in the non-aqueous solvent. As the non-aqueous solvent, for example, esters, ethers, nitriles, amides, mixed solvents of two or more thereof, and the like may be used. The non-aqueous solvent may contain a halogen-substituted product obtained by substituting at least a part of hydrogen atoms of these solvents with a halogen atom such as fluorine. It is noted that the non-aqueous electrolyte is not limited to the liquid electrolyte, and may be a solid electrolyte using a gel polymer or the like. As the electrolyte salt, a lithium salt such as LiPF₆ is used.

### [Example 1]

Hereinafter, the present disclosure will be further described with reference to examples, but the present disclosure is not limited to these examples.

### <Example 1>

### [Production of Positive Electrode]

95 parts by mass of LiNi_{0.7}Co_{0.25}Al_{0.05}O₂ as a positive electrode active material and 5 parts by mass of graphite as a conductive agent were mixed. 95 parts by mass of this mixture and 5 parts by mass of polyvinylidene fluoride (PVDF) as a binding material were dispersed in N-methyl-2 pyrrolidone (NMP) to prepare a positive electrode mixture slurry. The positive electrode mixture slurry was applied to both surfaces of a strip-shaped positive electrode current collector made of an aluminum foil having a thickness of 16 µm, and the coating film was heated and dried. The dried coating film was rolled to a density of 3.6 g/cc using a roll press machine to produce a positive electrode in which a positive electrode mixture layer was formed on both surfaces of a positive electrode current collector. Both ends in the width direction of the positive electrode were passed through a roller heated to 180°C to perform a heat treatment. The width of both ends of the positive electrode brought into contact with the heated roller was set to 3% with respect to the overall width of the positive electrode.

As a result of measuring the stiffness values of the first end region, the second end region, and the central region of the positive electrode, the stiffness values of the first end region and the second end region were lower than the stiffness value of the central region. The stiffness value of the entire positive electrode was 0.040 N/mm. The stiffness value is measured as described above.

### [Production of Negative Electrode]

96 parts by mass of artificial graphite as a negative electrode active material, 2 parts by mass of carboxymethyl cellulose (CMC), and 2 parts by mass of styrene-butadiene rubber were dispersed in water to prepare a negative electrode mixture slurry. The negative electrode mixture slurry was applied to both surfaces of a strip-shaped negative electrode current collector made of a copper foil having a thickness of 12 µm, the coating film was heated and dried, and the dried coating film was rolled using a roll press machine so as to have a density of 1.55 g/cc to produce a negative electrode in which a negative electrode mixture layer was formed on both surfaces of the negative electrode current collector.

### [Preparation of Non-aqueous Electrolyte]

In a non-aqueous solvent obtained by mixing ethylene carbonate (EC), ethyl methyl carbonate (EMC), and dimethyl carbonate (DMC) at a volume ratio of 20:20:60(1 atm, converted to 25°C), LiPF₆ was dissolved at a ratio of 1.2 mol/liter to prepare a non-aqueous electrolyte.

### [Production of Non-aqueous Electrolyte Secondary Battery]

(1) A wound electrode assembly was produced by winding a positive electrode and a negative electrode with a separator made of an olefin-based resin interposed therebetween.
(2) Insulating plates were disposed above and below the electrode assembly, and were inserted into an exterior can. The negative electrode lead attached to the negative electrode was welded to the bottom of the exterior can, and the positive electrode lead attached to the positive electrode was welded to the sealing assembly.
(3) After the non-aqueous electrolyte was injected into the exterior can, the opening end of the exterior can was crimped to the sealing assembly with a gasket interposed therebetween. This was used as a non-aqueous electrolyte secondary battery.

### <Example 2>

A positive electrode was produced in the same manner as in Example 1 except that the width of both ends of the positive electrode to be brought into contact with the heated roller was set to 5% with respect to the overall width of the positive electrode. As a result of measuring the stiffness values of the first end region, the second end region, and the central region of the positive electrode, the stiffness values of the first end region and the second end region were lower than the stiffness value of the central region. The stiffness value of the entire positive electrode was 0.030 N/mm.

Then, a non-aqueous electrolyte secondary battery was produced in the same manner as in Example 1 except that the positive electrode was used.

### <Example 3>

A positive electrode was produced in the same manner as in Example 1 except that the width of both ends of the positive electrode to be brought into contact with the heated roller was set to 25% with respect to the overall width of the positive electrode. As a result of measuring the stiffness values of the first end region, the second end region, and the central region of the positive electrode, the stiffness values of the first end region and the second end region were lower than the stiffness value of the central region. The stiffness value of the entire positive electrode was 0.025 N/mm.

Then, a non-aqueous electrolyte secondary battery was produced in the same manner as in Example 1 except that the positive electrode was used.

### <Example 4>

A positive electrode was produced in the same manner as in Example 1 except that the width of both ends of the positive electrode to be brought into contact with the heated roller was set to 30% with respect to the overall width of the positive electrode. As a result of measuring the stiffness values of the first end region, the second end region, and the central region of the positive electrode, the stiffness values of the first end region and the second end region were lower than the stiffness value of the central region. The stiffness value of the entire positive electrode was 0.020 N/mm.

Then, a non-aqueous electrolyte secondary battery was produced in the same manner as in Example 1 except that the positive electrode was used.

### <Example 5>

A positive electrode was produced in the same manner as in Example 1 except that the width of both ends of the positive electrode to be brought into contact with the heated roller was set to 33% with respect to the overall width of the positive electrode. As a result of measuring the stiffness values of the first end region, the second end region, and the central region of the positive electrode, the stiffness values of the first end region and the second end region were lower than the stiffness value of the central region. The stiffness value of the entire positive electrode was 0.018 N/mm.

Then, a non-aqueous electrolyte secondary battery was produced in the same manner as in Example 1 except that the positive electrode was used.

### <Example 6>

A positive electrode was produced in the same manner as in Example 1 except that, of the widths of both ends of the positive electrode to be brought into contact with the heated roller, the width of one end of the positive electrode was set to 5% with respect to the overall width of the positive electrode, and the width of the other end of the positive electrode was set to 33% with respect to the overall width of the positive electrode. As a result of measuring the stiffness values of the first end region, the second end region, and the central region of the positive electrode, the stiffness values of the first end region and the second end region were lower than the stiffness value of the central region. The stiffness value of the entire positive electrode was 0.028 N/mm.

Then, a non-aqueous electrolyte secondary battery was produced in the same manner as in Example 1 except that the positive electrode was used.

### <Example 7>

A positive electrode was produced in the same manner as in Example 1 except that, of the widths of both ends of the positive electrode to be brought into contact with the heated roller, the width of one end of the positive electrode was set to 33% with respect to the overall width of the positive electrode, and the width of the other end of the positive electrode was set to 5% with respect to the overall width of the positive electrode. As a result of measuring the stiffness values of the first end region, the second end region, and the central region of the positive electrode, the stiffness values of the first end region and the second end region were lower than the stiffness value of the central region. The stiffness value of the entire positive electrode was 0.028 N/mm.

Then, a non-aqueous electrolyte secondary battery was produced in the same manner as in Example 1 except that the positive electrode was used.

### <Comparative Example 1>

A positive electrode was produced in the same manner as in Example 1 except that the heat treatment with a roller heated to 180°C was not performed. As a result of measuring the stiffness value of each of the first end region, the second end region, and the central region of the positive electrode, all of the stiffness values were the same. The stiffness value of the entire positive electrode was 0.045 N/mm.

Then, when a wound electrode assembly was produced using the positive electrode, foil breakage occurred in the positive electrode, and thus the production of the non-aqueous electrolyte secondary battery was stopped at this time point.

### <Comparative Example 2>

A positive electrode was produced in the same manner as in Example 1 except that the entire positive electrode was passed through a roller heated to 180°C and subjected to a heat treatment. As a result of measuring the stiffness value of each of the first end region, the second end region, and the central region of the positive electrode, all of the stiffness values were the same. The stiffness value of the entire positive electrode was 0.013 N/mm.

Then, a non-aqueous electrolyte secondary battery was produced in the same manner as in Example 1 except that the positive electrode was used.

### <Comparative Example 3>

A positive electrode was produced in the same manner as in Example 1 except that the width of both ends of the positive electrode to be brought into contact with the heated roller was set to 35% with respect to the overall width of the positive electrode. As a result of measuring the stiffness values of the first end region, the second end region, and the central region of the positive electrode, the stiffness values of the first end region and the second end region were lower than the stiffness value of the central region. The stiffness value of the entire positive electrode was 0.016 N/mm.

Then, a non-aqueous electrolyte secondary battery was produced in the same manner as in Example 1 except that the positive electrode was used.

### <Comparative Example 4>

A positive electrode was produced in the same manner as in Example 1 except that the width of both ends of the positive electrode to be brought into contact with the heated roller was set to 40% with respect to the overall width of the positive electrode. As a result of measuring the stiffness values of the first end region, the second end region, and the central region of the positive electrode, the stiffness values of the first end region and the second end region were lower than the stiffness value of the central region. The stiffness value of the entire positive electrode was 0.015 N/mm.

Then, a non-aqueous electrolyte secondary battery was produced in the same manner as in Example 1 except that the positive electrode was used.

### <Comparative Example 5>

A positive electrode was produced in the same manner as in Example 1 except that, of the widths of both ends of the positive electrode to be brought into contact with the heated roller, the width of one end of the positive electrode was set to 30% with respect to the overall width of the positive electrode, and the width of the other end of the positive electrode was set to 40% with respect to the overall width of the positive electrode. As a result of measuring the stiffness values of the first end region, the second end region, and the central region of the positive electrode, the stiffness values of the first end region and the second end region were lower than the stiffness value of the central region. The stiffness value of the entire positive electrode was 0.016 N/mm.

Then, a non-aqueous electrolyte secondary battery was produced in the same manner as in Example 1 except that the positive electrode was used.

### <Comparative Example 6>

A positive electrode was produced in the same manner as in Example 1 except that, of the widths of both ends of the positive electrode to be brought into contact with the heated roller, the width of one end of the positive electrode was set to 40% with respect to the overall width of the positive electrode, and the width of the other end of the positive electrode was set to 30% with respect to the overall width of the positive electrode. As a result of measuring the stiffness values of the first end region, the second end region, and the central region of the positive electrode, the stiffness values of the first end region and the second end region were lower than the stiffness value of the central region. The stiffness value of the entire positive electrode was 0.016 N/mm.

Then, a non-aqueous electrolyte secondary battery was produced in the same manner as in Example 1 except that the positive electrode was used.

### <Comparative Example 7>

Both ends of the positive electrode in the width direction were not subjected to the heat treatment, and the central portion of the positive electrode in the width direction was passed through a roller heated to 180°C to perform the heat treatment. The width of the central portion of the positive electrode brought into contact with the heated roller was set to 34% with respect to the overall width of the positive electrode. Then, a positive electrode was produced in the same manner as in Example 1 except for this. As a result of measuring the stiffness values of the first end region, the second end region, and the central region of the positive electrode, the stiffness values of the first end region and the second end region were higher than the stiffness value of the central region. The stiffness value of the entire positive electrode was 0.033 N/mm.

Then, when a wound electrode assembly was produced using the positive electrode, foil breakage occurred in the positive electrode, and thus the production of the non-aqueous electrolyte secondary battery was stopped at this time point.

### [Evaluation of Charge-Discharge Cycle Characteristics]

The non-aqueous electrolyte secondary batteries of Examples 1 to 7 and Comparative Examples 2 to 6 were subjected to constant current charge at a current of 0.5 C under a temperature environment of 25°C until the voltage reached 4.2 V, and then to constant voltage charge at a voltage of 4.2 V until the current reached 1/50C. Then, constant current discharge was performed at a current of 0.2 C until the voltage reached 2.5 V. The discharge capacity at this time was defined as an initial discharge capacity. Next, each non-aqueous electrolyte secondary battery was subjected to constant current charging at a current of 0.5 C under a temperature environment of 25°C until the voltage reached 4.2 V, and then to constant voltage charging at a voltage of 4.2 V until the current reached 1/50C. Then, constant current discharge was performed at a current of 1 C until the voltage reached 2.5 V. This charge-discharge cycle was repeated 500 times, and the capacity retention rate was determined by the following formula. Capacity retention rate (%) = (discharge capacity at 500 cycles/initial discharge capacity) ×100

The results of Examples and Comparative Examples are summarized in Table 1.

**[Table 1]**

| | Stiffness value | | Foil breakage of positive electrode | Capacity retention rate (%) |
|---|---|---|---|---|
| | End region > central region | Entire positive electrode (N) | | |
| Example 1 | ○ | 0.040 | Absent | 84 |
| Example 2 | ○ | 0.030 | Absent | 84 |
| Example 3 | ○ | 0.025 | Absent | 82 |
| Example 4 | ○ | 0.020 | Absent | 80 |
| Example 5 | ○ | 0.018 | Absent | 77 |
| Example 6 | ○ | 0.028 | Absent | 80 |
| Example 7 | ○ | 0.028 | Absent | 80 |
| Comparative Example 1 | × | 0.045 | Present | - |
| Comparative Example 2 | ○ | 0.013 | Absent | 65 |
| Comparative Example 3 | ○ | 0.016 | Absent | 70 |
| Comparative Example 4 | ○ | 0.015 | Absent | 67 |
| Comparative Example 5 | ○ | 0.016 | Absent | 70 |
| Comparative Example 6 | ○ | 0.016 | Absent | 70 |
| Comparative Example 7 | × | 0.033 | Present | - |

In Comparative Examples 1 and 7 in which the stiffness value in the central region was higher than the stiffness values in the first end region and the second end region, foil breakage occurred in the positive electrode when the wound electrode assembly was produced. In Comparative Examples 2 to 6 in which the stiffness value in the central region was lower than the stiffness values in the first end region and the second end region, but the stiffness value of the entire positive electrode was less than 0.018 N/mm, the foil breakage of the positive electrode did not occur, but the capacity retention rate in the charge-discharge cycle was a low value less than or equal to 70%.

Meanwhile, in Examples 1 to 7 in which the stiffness value in the central region was lower than the stiffness values in the first end region and the second end region, and the stiffness value of the entire positive electrode was in the range greater than equal to 0.018 N/mm and less than or equal to 0.040 N/mm, foil breakage of the positive electrode did not occur, and the capacity retention rate in the charge-discharge cycle was higher than that in Comparative Examples 2 to 6, so that deterioration of the charge-discharge cycle characteristics could be suppressed.

### REFERENCE SIGNS LIST

- 10: Non-aqueous electrolyte secondary battery
- 11: Positive electrode
- 11a: First end region
- 11b: Second end region
- 11c: Central region
- 12: Negative electrode
- 13: Separator
- 14: Electrode assembly
- 15: Battery case
- 16: Exterior can
- 17: Sealing assembly
- 18, 19: Insulating plate
- 20: Positive electrode lead
- 21: Negative electrode lead
- 22: Projecting portion
- 23: Filter
- 24: Lower vent member
- 25: Insulating member
- 26: Upper vent member
- 27: Cap
- 28: Gasket
- 30: Test piece
- 32: Lower flat plate
- 34: Upper flat plate
- 36: Load cell

## Claims

1. A non-aqueous electrolyte secondary battery comprising: a wound electrode assembly in which a positive electrode and a negative electrode are wound with a separator interposed therebetween; and a non-aqueous electrolyte,
wherein the positive electrode includes a positive electrode current collector and a positive electrode mixture layer formed on the positive electrode current collector and containing a positive electrode active material and a binding material,
when the positive electrode is divided into a first end region having a width of 1/3 with respect to an overall width of the positive electrode from one end in a width direction of the positive electrode to a center side, a second end region having a width of 1/3 with respect to the overall width of the positive electrode from the other end in the width direction of the positive electrode to the center side, and a central region sandwiched between the first end region and the second end region,
a stiffness value of each of the first end region and the second end region is lower than a stiffness value of the central region, and
a stiffness value of the entire positive electrode is in a range greater than or equal to 0.018 N/mm and less than or equal to 0.040 N/mm.

2. The non-aqueous electrolyte secondary battery according to claim 1, wherein the stiffness value of each of the first end region and the second end region of the positive electrode is less than or equal to 0.025 N/mm.

3. The non-aqueous electrolyte secondary battery according to claim 1 or 2, wherein the stiffness value of the central region of the positive electrode is greater than or equal to 0.020 N/mm.
